# EUROPÄISCHE PATENTSCHRIFT

(11) **EP 2 585 408 B1**
(45) Veröffentlichungstag und Bekanntmachung des Hinweises auf die Patenterteilung: **23.04.2014**
(21) Anmeldenummer: 11727918.2
(22) Anmeldetag: 07.06.2011
(51) Int. Cl.: C03B 3/02, F26B 17/14, F26B 23/00, F28C 3/14, F28D 7/16, F26B 21/00, F28D 21/00

(54) **VORRICHTUNG ZUM TROCKNEN UND VORWÄRMEN VON PARTIKELFÖRMIGEM BESCHICKUNGSGUT**
DEVICE FOR DRYING AND PREHEATING PARTICULATE FEEDSTOCK
DISPOSITIF POUR SÉCHER ET PRÉCHAUFFER UNE CHARGE SE PRÉSENTANT SOUS FORME DE PARTICULES

(30) Priorität: 28.06.2010 DE 102010025365
(43) Veröffentlichungstag der Anmeldung: 01.05.2013
(73) Patentinhaber: Beteiligungen Sorg GmbH & Co. KG, 97816 Lohr am Main (DE)
(72) Erfinder: LINDIG, Matthias, 55218 Ingelheim (DE); SORG, Alexander, 63739 Aschaffenburg (DE)
(74) Vertreter: Keil & Schaafhausen Patent- und Rechtsanwälte
(86) Internationale Anmeldenummer: PCT/EP2011/002772
(87) Internationale Veröffentlichungsnummer: WO 2012/000601

(56) Entgegenhaltungen:
- EP-A1- 0 255 606
- DE-A1- 19 728 332
- DE-B- 1 235 528
- DE-C1- 19 829 644

## Beschreibung

Die Erfindung betriff eine Vorrichtung zum Trocknen und Vorwärmen von partikelförmigem Beschickungsgut für Glas-Schmelzanlagen gemäß dem Oberbegriff des Anspruchs 1.

Berichte über die Vorbereitung von Beschickungsgut für Glasschmelzöfen werden schon seit Jahrzehnten veröffentlicht, in vielen Fällen mit Hinweisen auf die Verklebungsneigung von Gemengen mit unterschiedlichen Komponenten. Die Gemenge werden durch sehr unterschiedliche Verwendungszwecke der Glasschmelzen vorgegeben. Die Ursachen für die Verklebungsneigung der Komponenten sind sehr vielfältig und beruhen auf sehr unterschiedlichen Schmelzpunkten, Viskositäten, Partikelgrößen und -formen sowie auf thermischen und mechanischen Einflüssen auf dem Transportweg vor dem Aufschmelzen. Besonders störend ist hierbei mit dem Beschickungsgut eingeschlepptes freies oder gebundenes Wasser sowie Wasserdampf, der mit den Abgasen aus der nachgeschalteten Schmelzwanne zur Beheizung und Wärmerückgewinnung eingeführt wird. Die Kondensation verdampften Wassers fördert die Verklebungsneigung enorm. Ein weiterer störender Effekt ist ein Turm von Beschickungsgut, der sich über den obersten Heizleitungen unkontrolliert und ungleichmäßig aufschichtet und in dem wiederum Wasserdampf kondensiert.

Durch die US 7 494 948 B2 ist es bekannt, frei fliessende Beschickungsmengen aus Glaskomponenten für Glasschmelzöfen jeweils in feuchtem Zustand (moist) entweder bei Temperaturen unter 35°C zu lagern oder auf Temperaturen von 100°C oder darüber vorzuwärmen, bevor sie einem Glasschmelzofen zugeführt werden. Das feuchte Beschickungsgut soll dabei einen freien Wasseranteil von 2 % bis 10 % und von 0,0001 % bis 5 % eines grenzflächenaktiven Stoffes enthalten, vorzugsweise eine wasserlösliche Seife wie ein Carboxilat mit 4 bis 22 gebundenen C-Atomen. Das feuchte Beschickungsgut kann dabei gelagert und auf mindestens 150°C vorgewärmt werden und bleibt ohne Absetzen frei fliessfähig. Der Autor führt aus, dass es vor seiner Erfindung bei feuchtem Beschickungsgut nicht möglich war, damit einen Vorwärmer zu beschicken, weil bei Temperaturen von 100°C und darüber ein Verbacken der Masse unvermeidlich war. Die Schrift schweigt sich über die Patikelgrösse aus, jedoch wird unter Hinweis auf die EP 11 23 903 A2 ausgeführt, dass ohne eine dort beschriebene Vorrichtung mit einem elektrostatischen Staubabscheider Feinstaub-Partikel zu einer Umweltverschmutzung führten.

Durch die DE 10 2008 030 161 B3 ist ein schachtförmiger Wärmetauscher für die Vorwärmung von partikelförmigem Glasgemenge für Glasschmelzöfen bekannt, durch den Rauchgase aus der Ofenbeheizung in alternierenden und mäandrierenden waagrechten Rauchgaskanälen geleitet werden. Der Wärmetauscher besitzt zahlreiche senkrechte und im Querschnitt rechteckige Schmelzgutkanäle, die sich querverschoben mit den Rauchgaskanälen kreuzen und durch öffnungen in den Kanalwänden derart miteinander verbunden sind, dass Wasserdampf aus den senkrechten Schmelzgutkanälen in Querrichtung abgesaugt und der Eintritt von Rauchgasen in die Schmelzgutkanäle verhindert werden soll. Dabei ist jedoch nicht auszuschliessen, dass durch die Abstände der besagten öffnungen in den Schachtwänden und durch die langen horizontalen Strömungswege innerhalb des Schmelzguts darin Feuchtigkeit zurückbleibt, die zu einem Verkleben der Partikel des Schmelzgutes und zu einer Blockierung das Nachschubs führt.

Keines der vorgenannten Dokumente befasst sich mit dem Problem, das Beschickungsgut innerhalb des Schachtes derart in Bewegung zu halten, dass ein Verkleben der Partikel verhindert oder unterbrochen und einer Verklebungsneigung entgegengewirkt wird.

Der Erfindung liegt daher die Aufgabe zugrunde, eine Vorrichtung anzugeben, durch die das Beschickungsgut innerhalb des Schachtes derart in Bewegung gehalten wird, dass ein Verkleben der Partikel verhindert oder unterbrochen und einer Verklebungsneigung entgegengewirkt wird.

Die Lösung der Aufgabe erfolgt bei der eingangs angegebenen Vorrichtung erfindungsgemäß durch die Merkmale des kennzeichnenden Teils des Anspruchs 1. Dadurch wird zuverlässig die obige Aufgabe gelöst.

Um zu verhindern, dass es bei Vorwärmern für Glasscherben zur Verklebung der Verbackung der einzelnen Scherben im Scherbenvorwärmer kommt, wodurch die Schüttfähigkeit der Scherben herabgesetzt wird oder sogar gänzlich verloren geht, was zur Folge hat, dass die aufgeheizten Scherben nur unter Schwierigkeiten aus den Vorwärmern entnehmbar sind, ist in der EP 0 255 606 A1 bereits vorgeschlagen worden, dass die das Beschickungsgut aufnehmenden senkrechten Schächte jeweils von zwei etwa parallelen Führungswänden begrenzte werden, von denen die beiden äußeren Führungswände fest angeordnet sind, wohingegen die beiden inneren Führungswände zu einem bewegbaren Zentralkörper zusammengefasst sind. Der Zentralkörper ist an seinem oberen Ende gelenkig aufgehängt und mittels eines Unwucht- oder Exzenterantriebes in eine Schwing- oder Rüttelbewegung versetzbar. In dem Moment, in dem die bewegliche Führungswand zurückbewegt wird, rutscht das Beschickungsgut nach und nimmt diesen Raum ein und verhindert damit eine Rückbewegung der Führungswand in ihre Ausgangslage. Folglich können die in dem Scherbenschacht befindlichen Glasscherben weder aufgelockert und schüttfähig gehalten werden, noch können sie wieder schüttfähig gemacht werden.

Es ist im Zuge weiterer Ausgestaltungen der Erfindung besonders vorteilhaft, wenn - entweder einzeln oder in Kombination -
* die beweglichen Führungselemente an mindestens drei Stellen ihres Umfangs an Pendelstreben aufgehängt sind,
* mindestens ein Teil der Pendelstreben im Innern des Schachtes zwischen diesem und den Führungselementen angeordnet ist,
* der Rüttelantrieb mittels einer waagrechten Schubstange mit dem zugehörigen Führungselement verbunden ist, und wenn die Schubstange durch eine Wand des Schachtes hindurch geführt ist,
* die Schubstange ausserhalb des Schachtes mittels einer Pendelstrebe an dessen Wand aufgehängt ist,
* zwischen den einzelnen Etagen (E1, E2, E3, E4) auf dem grössten Teil des Umfangs des Schachtes waagrechte Trennplatten angeordnet sind, die auf dem offenen Teil ihres Umfangs einen Strömungsweg für die Heizgase frei lassen,
* die Strömungswege alternierend versetzt übereinander angeordnet sind.
* der Querschnitt des Schachtes rechteckig ausgeführt ist, wenn die Schubstangen für die Führungselemente mit einem Tragbügel verbunden sind, der den Schacht und die Führungselemente auf gegenüber liegenden Seiten umgreift und dort durch Rollen geführt ist, und/oder, wenn
* der Schacht, die Führungselemente und die Trennplatten in Rechteckflächen angeordnet sind.

Ausführungsbeispiele des Erfindungsgegenstandes und deren Wirkungsweisen und weitere Vorteile werden nachfolgend anhand der schematisierten Figuren 1 bis 6 näher erläutert.

Es zeigen:
- Figur 1: einen Vertikalschnitt durch einen Schacht mit in Etagen angeordneten Führungselementen,
- Figur 2: eine Gasführung in einer einzelnen Etage durch Trennplatten und Gaswege,
- Figur 3: einen Horizontalschnitt durch den Schacht und eine Draufsicht auf eine der Trennplatten,
- Figur 4: eine noch weiter schematisierte Draufsicht auf eine Dreipunktlagerung eines der Führungselemente,
- Figur 5: eine gleichfalls weiter schematisierte Draufsicht auf eine Vierpunktlagerung eines der Führungselemente, und
- Figur 6: eine waagrechte Schnittdarstellung analog Figur 3 mit einem Tragbügel, der den Schacht auf einer Vierpunktlagerung von aussen umgreift und mit der zusätzlichen Möglichkeit, das zugehörige Führungselement mit dem öffnen des Schachtes seitlich herauszufahren.

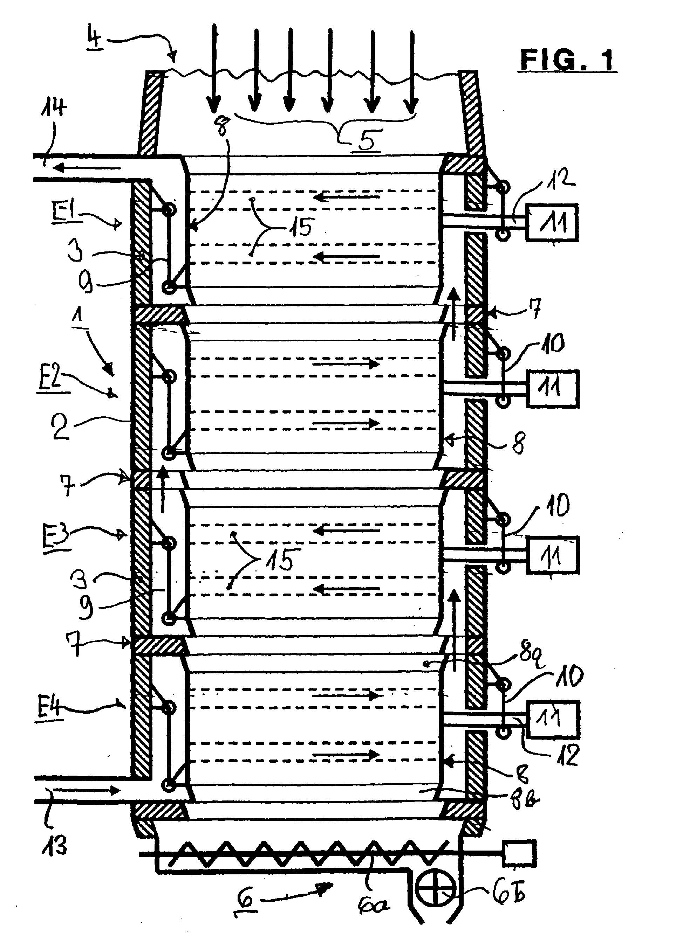

In Figur 1 ist ein Schacht 1 mit rechteckigem Querschnitt dargestellt, der aus einem metallischen Mantel 2 mit Auskleidungen 3 aus Wärmedämmstoffen besteht. Am oberen Ende besitzt der Schacht 1 eine Beschickungsöffnung 4, die mit möglichst gleichmässiger Flächenverteilung mit Beschickungsgut 5 versehen wird, das hier durch Pfeile angedeutet ist. Das Beschickungsgut 5 strömt unter der Wirkung der Schwerkraft nach unten. Am unteren Ende besitzt der Schacht 1 eine Entnahmevorrichtung 6 mit einer motorisch angetriebenen Förderschnecke 6a und einer Dosiereinrichtung 6b. Damit wird das aufgeheizte Beschickungsgut einer hier nicht dargestellten Glas-Schmelzwanne zugeführt.

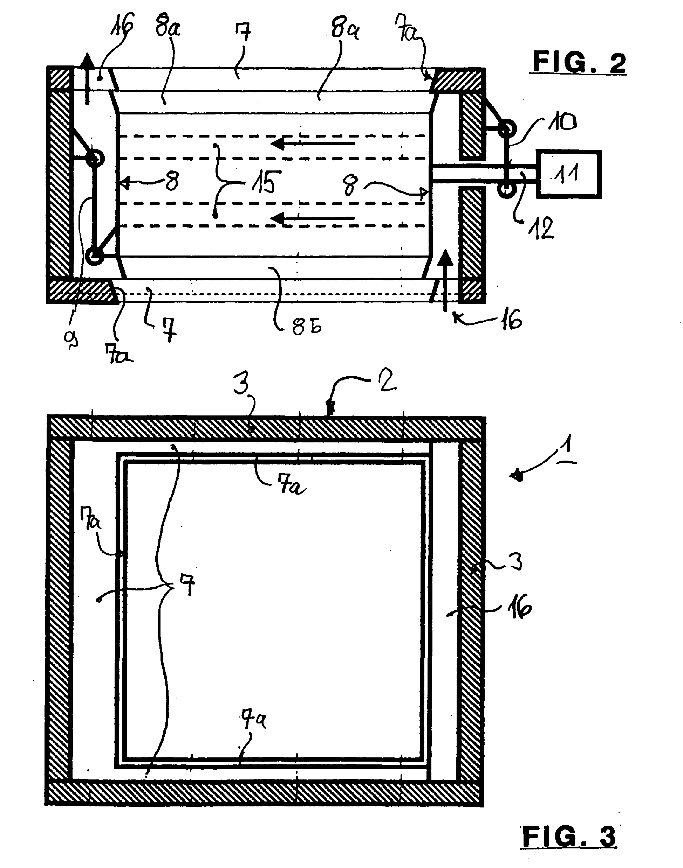

Die Auskleidungen 3 sind etagenförmig übereinander angeordnet und durcn Trennplatten 7 getrennt, von denen die Figur 3 eine Draufsicht zeigt. Innerhalb einer jeden Etage (E1, E2, E3 und E4) sind mit rechteckigem Zusammenhang senkrechte rahmenförmige Führungselemente 8 angeordnet, die an ihren oberen und unteren Kanten nach unten konvergierende Schrägflächen 8a und 8b aufweisen, die einen stufenfreien Transportweg für das Beschickungsgut 5 bilden. Die Trennplatten 7 sind durch nicht besonders hervorgehobene Bewegungsspalte von den Führungselementen 8 getrennt, so dass diese waagrechte Querbewegungen ausführen können. Dazu sind die rahmenförmigen Führungselemente 8 an mindestens drei Stellen ihres Umfangs entweder direkt oder indirekt an Pendelstreben 9 und 10 aufgehängt und mit Rüttelantrieben 11 verbunden, die über Schubstangen 12 mit den Führungselementen 8 verbunden sind. Die Rüttelantriebe 11 können mechanische oder elektrische Innenleben bekannter Bauarten besitzen und sehr unterschiedliche Bewegungsparameter ausführen und zwar hinsichtlich Frequenzen, Amplituden und Richtungen, so dass Verkrustungen zwischen den Partikeln des Beschickungsguts 5 in jedem Falle auf dem Transportweg aufgebrochen werden.

Wie Figur 1 weiterhin zeigt, sind die Pendelstreben 9 innerhalb des Schachtes 1 zwischen dessen Auskleidung 3 und jeweils einem der Führungselemente 8 angeordnet und die Pendelstreben 10 außerhalb des Schachtes 1 zwischen dessen Mantel 2 und den Rüttelantrieben 11. Außerdem besitzt der Schacht 1 an seinem unteren Ende einen Gaskanal 13 für die Einleitung von heißen Abgasen aus der nachgeschalteten Glas-Schmelzwanne und an seinem oberen Ende einen Gaskanal 14 für die Abfuhr von Abgasen an einen hier nicht gezeigten Kamin, ggf. über eine Reinigungsvorrichtung. Die Gasführungen innerhalb des Schachtes 1 sind durch Pfeile angedeutet. Hierfür besitzen die Führungselemente 8 in jeweils zwei Ebenen waagrechte durchgehende Gasführungen 15, die gestrichelt angedeutet sind. Bezüglich der Ausbildung der Gasführungen 15 ist folgendes zu beachten: In dem obersten Führungselement 8 sollten die Gasführungen 15 als auf dem Umfang geschlossene Kanäle ausgeführt sein, während in den darunter liegenden Etagen die Gasführungen 15 als nach unten offene Kanäle ausgeführt sein können oder sollten, damit noch aus dem Gemenge austretender Wasserdampf mit dem Heizgas abgeführt werden kann.

Wie auch in Figur 2 dargestellt, strömen die Heizgase in den übereinander angeordneten Etagen in entgegen gesetzten Richtungen. Dies wird dadurch erreicht, dass die in Figur 3 dargestellten Trennplatten 7 in alternierenden Lagen übereinander angeordnet sind, und zwar derart, dass der jeweils auf einer Seite freigelassene Strömungsweg 16 einen Wechsel der Strömungsrichtungen der Heizgase ermöglichen.

Die Figur 3 zeigt einen Querschnitt durch den Schacht 1 mit seinem metallischen Mantel 2 und den isolierenden Auskleidungen 3. Die hier in der Draufsicht gezeigte Trennplatte 7 besitzt auf drei Seiten ihres Umfangs waagrechte Trennflächen und an diesem Umfang wiederum nach unten konvergierende Schrägflächen 7a. Die vierte Umfangsseite ist offen und bildet dort den bereits beschriebenen Strömungsweg 16.

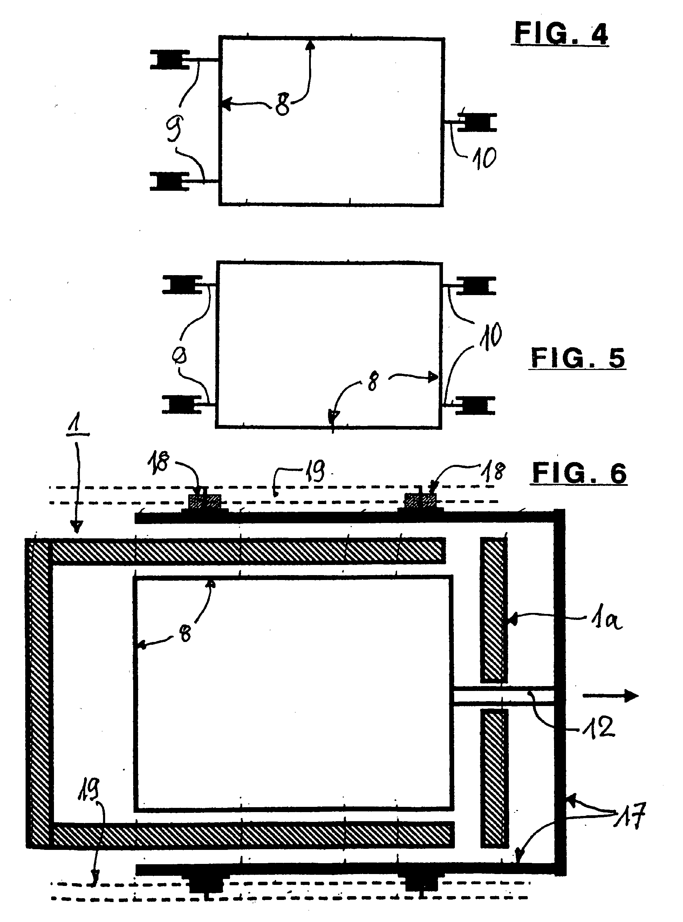

Die Figur 4 zeigt eine noch weiter schematisierte Draufsicht auf eine Dreipunktlagerung eines der Führungselemente, 8 und die Figur 5 eine gleichfalls weiter schematisierte Draufsicht auf eine Vierpunktlagerung eines der Führungselemente 8.

Die Figur 6 zeigt eine waagrechte Schnittdarstellung analog Figur 3 mit einem verwindungssteifen Tragbügel 17, der den Schacht 1 auf einer Vierpunktlagerung von aussen umgreift und mit vier angetriebenen Rollen 18 auf Schienen 19 verfahrbar ist. Damit kann nicht nur eine Oszillations- oder Rüttelbewegung des Führungselements 8 ausgeführt werden, sondern die zusätzliche Möglichkeit, das zugehörige Führungselement 8 zum öffnen des Schachtes 1 seitlich herauszufahren. Dabei wird ein abgetrennter Wandabschnitt 1 a des Schachtes 1 mit herausgefahren.

### Bezugszeichenliste:

- 1: Schacht
- 1a: Wandabschnitt
- 2: Mantel
- 3: Auskleidungen
- 4: Beschickungsöffnung
- 5: Beschickungsgut
- 6: Entnahmevorrichtung
- 6a: Förderschnecke
- 6b: Dosiereinrichtung
- 7: Trennplatten
- 7a: Schrägflächen
- 8: Führungselemente
- 8a: Schrägflächen
- 8b: Schrägflächen
- 9: Pendelstreben
- 10: Pendelstreben
- 11: Rüttelantriebe
- 12: Schubstangen
- 13: Gaskanal
- 14: Gaskanal
- 15: Gasführungen
- 16: Strömungsweg
- 17: Tragbügel
- 18: Rollen
- 19: Schienen

- E1, E2, E3, E4: Etagen

## Patentansprüche

1. Vorrichtung zum Trocknen und Vorwärmen von partikelförmigem Beschickungsgut (5) für Glas-Schmelzanlagen mit einem senkrechten Schacht (1), der am oberen Ende eine Beschickungsöffnung (4) und am unteren Ende eine Entnahmevorrichtung (6) für das Beschickungsgut aufweist, und in dem etagenweise mehrere Gasführungen (15) angeordnet sind, wobei der Schacht (1) mit mindestens einem Gaskanal (13) für die Einleitung von Abgasen aus der Schmelzanlage und einem Gaskanal (14) für die Abfuhr von Abgasen versehen ist,
**dadurch gekennzeichnet,**
a) **dass** innerhalb des Schachtes (1) und mit allseitigen seitlichen Abständen etagenweise übereinander rahmenförmige Führungselemente (8) für das Beschickungsgut (5) angeordnet sind, durch die jeweils ein Teil der Gasführungen (15) hindurchgeführt ist,
b) **dass** mindestens ein Teil der Führungselemente (8) unabhängig voneinander quer zum Schacht (1) beweglich gelagert ist,
c) **dass** die Führungselemente (8) an ihren oberen Enden mit konvergierenden Schrägflächen (8a) für die Einführung des Beschickungsguts (5) und an ihren unteren Enden mit konvergierenden Schrägflächen (8b) für den Austritt des Beschickungsguts (5) versehen sind, und
d) **dass** mindestens ein Teil der Führungselemente (8) mit einem Rüttelantrieb (11) verbunden ist.

2. Vorrichtung nach Anspruch 1, **dadurch gekennzeichnet, dass** die beweglichen Führungselemente (8) an mindestens drei Stellen ihres Umfangs an Pendelstreben (9, 10) aufgehängt sind.

3. Vorrichtung nach Anspruch 2, **dadurch gekennzeichnet, dass** mindestens ein Teil der Pendelstreben (9, 1 0) im Innern des Schachtes (1) zwischen diesem und den Führungselementen (8) angeordnet ist.

4. Vorrichtung nach Anspruch 2, **dadurch gekennzeichnet, dass** der Rüttelantrieb (11) mittels einer waagrechten Schubstange (12) mit dem zugehörigen Führungselement (8) verbunden ist, und dass die Schubstange (12) durch eine Wand, des Schachtes (1) hindurch geführt ist.

5. Vorrichtung nach Anspruch 4, **dadurch gekennzeichnet, dass** die Schubstange (12) ausserhalb des Schachtes (1) mittels einer Pendelstrebe (10) an dessen Wand aufgehängt ist.

6. Vorrichtung nach Anspruch 1, **dadurch gekennzeichnet, dass** zwischen den einzelnen Etagen (E1, E2, E3, E4) auf dem grössten Teil des Umfangs des Schachtes (1) waagrechte Trennplatten (7) angeordnet sind, die auf dem offenen Teil ihres Umfangs einen Strömungsweg (16) für die Heizgase frei lassen.

7. Vorrichtung nach Anspruch 6, **dadurch gekennzeichnet, dass** die Strömungswege (16) alternierend versetzt übereinander angeordnet sind.

8. Vorrichtung nach Anspruch 1, **dadurch gekennzeichnet, dass** der Querschnitt des Schachtes (1) rechteckig ausgeführt ist, dass die Schubstangen (12) für die Führungselemente (8) mit einem Tragbügel (17) verbunden sind, der den Schacht (1) und die Führungselemente (8) auf gegenüber liegenden Seiten umgreift und dort durch Rollen (18).geführt ist.

9. Vorrichtung nach Anspruch 1, **dadurch gekennzeichnet, dass** der Schacht (1), die Führungselemente (8) und die Trennplatten (7) in Rechteckflächen angeordnet sind.

## Claims

1. A device for drying and preheating particulate feedstock (5) for glass melting systems, with a vertical shaft (1) that features a feed opening (4) on the upper end and a withdrawal device (6) for the feedstock on the lower end and in which several gas ducts (15) are arranged in a tiered fashion, wherein the shaft (1) is provided with the least one gas channel (13) for the introduction of waste gases from the melting system and one gas channel (14) for the removal of waste gases,
**characterized in**
a) **that** frame-shaped guide elements (8) for the feedstock (5) are arranged on top of one another in a tiered fashion within the shaft (1) and with lateral clearances on all sides, wherein some of the gas ducts (15) respectively extend through said guide elements,
b) **that** at least some of the guide elements (8) are supported such that they can be moved transverse to the shaft (1) independently of one another,
c) **that** the guide elements (8) are provided with converging bevels (8a) for the introduction of the feedstock (5) on their upper ends and with converging bevels (8b) for the withdrawal of the feedstock (5) on their lower ends, and
d) **that** at least some of the guide elements (8) are connected to a vibratory drive (11).

2. The device according to claim 1, **characterized in that** the movable guide elements (8) are suspended on pendulum stanchions (9, 10) on at least three points of their circumference.

3. The device according to claim 2, **characterized in that** at least some of the pendulum stanchions (9, 10) are arranged in the interior of the shaft (1) between this shaft and the guide elements (8).

4. The device according to claim 2, **characterized in that** the vibratory drive (11) is connected to the assigned guide element (8) by means of a horizontal connecting rod (12), and **in that** the connecting rod (12) extends through a wall of the shaft (1).

5. The device according to claim 4, **characterized in that** the connecting rod (12) is suspended outside the shaft (1) on the wall thereof by means of a pendulum stanchion (10).

6. The device according to claim 1, **characterized in that** horizontal separating plates (7) are arranged between the individual tiers (E1, E2, E3, E4) over the majority of the circumference of the shaft (1), wherein said separating plates form a flow path (16) for the heating gases on the open part of their circumference.

7. The device according to claim 6, **characterized in that** the flow paths (16) are arranged on top of one another in an alternately offset fashion.

8. The device according to claim 1, **characterized in that** the cross section of the shaft (1) is realized rectangular, and **in that** the connecting rods (12) for the guide elements (8) are connected to a support strap (17) that encompasses the shaft (1) and the guide elements (8) on opposite sides and is guided at these locations by means of rollers (18).

9. The device according to claim 1, **characterized in that** the shaft (1), the guide elements (8) and the separating plates (7) are arranged in rectangular areas.

## Revendications

1. Dispositif pour sécher et préchauffer une charge (5) se présentant sous forme de particules pour des installations de fusion de verre, avec un puits (1) vertical, qui sur l'extrémité supérieure comporte une ouverture de chargement (4) et sur l'extrémité inférieure un dispositif de prélèvement (6) de la charge et dans lequel plusieurs conduites de gaz (15) sont disposées par étages, le puits (1) étant muni d'au moins un canal de gaz (13) pour l'introduction de gaz perdus sortant de l'installation de fusion et d'un canal de gaz (14) pour l'évacuation de gaz perdus, **caractérisé en ce que**
a) à l'intérieur du puits (1) et à des écarts latéraux de toute part sont disposés les uns au-dessus des autres par étages des éléments de guidage (8) en forme de cadres pour la charge (5), à travers chacun desquels passe une partie des conduites de gaz (15),
b) **en ce qu'**au moins une partie des éléments de guidage (8) sont logés en étant mobiles, indépendamment les uns des autres à la transversale du puits (1),
c) **en ce que** les éléments de guidage (8) sont munis sur leurs extrémités supérieures de surfaces inclinées (8a) convergentes pour l'introduction de la charge (5) et sur leur extrémités inférieures de surfaces inclinées (8b) convergentes pour la sortie de la charge (5) et
d) **en ce qu'**au moins une partie des éléments de guidage (8) est reliée à un entraînement en vibrations (11).

2. Dispositif selon la revendication 1, **caractérisé en ce que** les éléments de guidage (8) mobiles sont accrochés sur au moins trois endroits de leur périphérie à des montants oscillants (9, 10).

3. Dispositif selon la revendication 2, **caractérisé en ce qu'**au moins une partie des montants oscillants (9, 10) est placée à l'intérieur du puits (1), entre celui-ci et les éléments de guidage (8).

4. Dispositif selon la revendication 2, **caractérisé en ce que** l'entraînement en vibrations (11) est relié au moyen d'une bielle (12) horizontale avec l'élément de guidage (8) associé et **en ce que** la bielle (12) est guidée à travers une paroi du puits (1).

5. Dispositif selon la revendication 4, **caractérisé en ce que** la bielle (12) est accrochée à l'extérieur du puits (1) au moyen d'une traverse oscillante (10) sur la paroi de ce dernier.

6. Dispositif selon la revendication 1, **caractérisé en ce qu'**entre les étages (E1, E2, E3, E4) individuels, sur la plus grande partie de la périphérie du puits (1) sont placées des plaques de séparation (7) horizontales qui sur la partie ouverte de leur périphérie laissent libre un trajet d'écoulement (16) pour les gaz de chauffage.

7. Dispositif selon la revendication 6, **caractérisé en ce que** les trajets d'écoulement (16) sont placés les uns au-dessus des autres, en déport alterné.

8. Dispositif selon la revendication 1, **caractérisé en ce que** la section transversale du puits (1) est conçue de forme rectangulaire, **en ce que** les bielles (12) pour les éléments de guidage (8) sont reliées à un étrier porteur (17) qui entoure le puits (1) et les éléments de guidage (8) sur des côtés opposés et qui y est guidé sur des galets (18).

9. Dispositif selon la revendication 1, **caractérisé en ce que** le puits (1), les éléments de guidage (8) et les plaques de séparation (7) sont placés dans des surfaces rectangulaires.
